# DEMANDE DE BREVET EUROPEEN

(11) **EP 4 309 758 A1**
(43) Date de publication de la demande: **24.01.2024**
(21) Numéro de dépôt: 23181599.4
(22) Date de dépôt: 27.06.2023
(51) Int. Cl.: B01D 19/00, B60K 11/04, F01P 11/02, F16K 3/04, F16K 5/04

(54) **RÉSERVOIR DE DÉGAZAGE**

(30) Priorité: 21.07.2022 FR 2207508
(71) Demandeur: Illinois Tool Works Inc., Glenview IL 60025 (US)
(72) Inventeur: IAFRATE, Serge, Glenview, Illinois, 60025 (US)
(74) Mandataire: HGF

(57) **Abrégé**

L'invention concerne un réservoir de dégazage (1) comprenant une première entrée (20) et un tube plongeur (4) s'étendant entre la première entrée (20) et une partie inférieure (3) du réservoir (1), dans lequel le tube plongeur (4) est mobile, en utilisation, par rapport à la première entrée (20) entre une première position dans laquelle le tube plongeur (4) fournit un conduit de fluide entre la première entrée (20) et la partie inférieure (3) du réservoir (1), et une deuxième position dans laquelle la communication de fluide entre la première entrée (20) et la partie inférieure (3) du réservoir (1) est fermée.

## Description

### Domaine technique de l'invention

L'invention concerne généralement un réservoir de dégazage. Plus précisément, mais non exclusivement, la présente invention concerne un réservoir de dégazage pour un système de refroidissement pour véhicule automobile.

### Arrière-plan technique

Il est connu de fournir un réservoir de dégazage pour éliminer les gaz, principalement l'air, qui peuvent pénétrer dans le fluide de transfert de chaleur, généralement un liquide de refroidissement.

FR3016923A décrit un tel réservoir de dégazage, qui comprend une entrée au sommet du réservoir, une sortie au fond du réservoir, un tube plongeur reliant de manière fluide l'entrée à une partie inférieure du réservoir et une chicane entre le tube plongeur et la sortie.

### Résumé de l'invention

L'invention vise à fournir un réservoir de dégazage avec un moyen simple de contrôler l'écoulement d'un liquide introduit depuis l'entrée dans le réservoir.

L'invention concerne un réservoir de dégazage comprenant une première entrée et un tube plongeur s'étendant entre la première entrée et une partie inférieure du réservoir, dans lequel le tube plongeur est mobile, en utilisation, par rapport à la première entrée entre une première position dans laquelle le tube plongeur fournit un conduit de fluide entre la première entrée et la partie inférieure du réservoir, et une deuxième position dans laquelle la communication de fluide entre la première entrée et la partie inférieure du réservoir est fermée.

Le tube plongeur peut comprendre un passage de fluide. Le passage de fluide peut être aligné avec la première entrée lorsque le tube plongeur est dans la première position, par exemple pour ainsi mettre en communication la première entrée avec l'intérieur du tube plongeur. Le tube plongeur peut comprendre une surface périphérique, qui peut obstruer l'entrée lorsque le tube plongeur dans la deuxième position.

Plus précisément, le tube plongeur peut comprendre un passage de fluide qui est aligné avec la première entrée lorsque le tube plongeur est dans la première position, pour ainsi mettre en communication la première entrée avec l'intérieur du tube plongeur, et une surface périphérique qui obstrue la première entrée lorsque le tube plongeur est dans la deuxième position.

Le tube plongeur peut être rotatif par rapport à la première entrée. Le passage de fluide du tube plongeur peut comprendre un évidement. L'évidement peut être partiellement circonférentiel. Le passage de fluide du tube plongeur peut comprendre un trou. Le trou peut être radial. Le trou peut être dans l'évidement.

Plus précisément, le tube plongeur peut être rotatif par rapport à la première entrée, dans lequel le passage de fluide du tube plongeur comprend un évidement partiellement circonférentiel avec un trou radial dans celui-ci.

Le réservoir peut comprendre un logement de vanne. Le logement de vanne peut être tubulaire. Le logement de vanne peut comprendre la première entrée. Le tube plongeur peut être reçu, par exemple de manière rotative, à l'intérieur du logement de vanne. Le tube plongeur peut être reçu, par exemple de manière rotative, à l'intérieur d'un logement de vanne tubulaire.

Selon un mode de réalisation de la présente invention, le réservoir comprend un logement de vanne tubulaire qui comprend la qui comprend la première entrée.

Plus précisément, le tube plongeur peut être reçu de manière rotative à l'intérieur d'un logement de vanne tubulaire.

Le réservoir peut comprendre une deuxième entrée. Le tube plongeur peut fournir un conduit de fluide entre la deuxième entrée et la partie inférieure du réservoir, par exemple lorsque le tube plongeur est dans la deuxième position. Le tube plongeur peut fournir un conduit de fluide entre la deuxième entrée et la partie inférieure du réservoir lorsque le tube plongeur est dans la première position. Le tube plongeur peut fournir un conduit de fluide entre la deuxième entrée et la partie inférieure du réservoir lorsque le tube plongeur est dans chacune des première et deuxième positions.

Plus précisément, le réservoir peut comprendre une deuxième entrée, dans lequel le tube plongeur fournit un conduit de fluide entre la deuxième entrée et la partie inférieure du réservoir lorsque le tube plongeur est dans chacune des première et deuxième positions.

Dans d'autres exemples, la communication de fluide entre la deuxième entrée et la partie inférieure du réservoir peut être fermée lorsque le tube plongeur est dans la première position. En outre ou alternativement, le tube plongeur peut fournir un conduit de fluide entre la deuxième entrée et la partie inférieure du réservoir lorsque le tube plongeur est dans la deuxième position.

Dans d'autres exemples encore, le tube plongeur peut prendre des première, deuxième et troisième positions. Le tube plongeur peut fournir un conduit de fluide entre chacune des première et deuxième entrées et la partie inférieure du réservoir lorsque le tube plongeur est dans la première position. La communication de fluide entre la première entrée et la partie inférieure du réservoir peut être fermée lorsque le tube plongeur est dans la deuxième position. Le tube plongeur peut fournir un conduit de fluide entre la deuxième entrée et la partie inférieure du réservoir lorsque le tube plongeur est dans la deuxième position. La communication de fluide entre chacune des première et deuxième entrées et la partie inférieure du réservoir peut être fermée lorsque le tube plongeur est dans la troisième position.

Le réservoir peut comprendre un moyen d'actionnement ou un actionneur, par exemple, pour déplacer le tube plongeur entre les première et deuxième positions. Le réservoir peut comprendre une sortie. La sortie peut être dans la partie inférieure du réservoir. Le réservoir peut comprendre une chicane. La chicane peut se trouver entre le tube plongeur et la sortie. La chicane peut entourer au moins partiellement la sortie.

Le réservoir peut comprendre un col décrivant une ouverture pour introduire un liquide dans le réservoir. Le réservoir peut comprendre un bouchon pour fermer de manière amovible le col. Le bouchon peut s'engager par filetage avec le col, ou peut être configuré pour s'engager par filetage avec le col.

L'invention concerne également un circuit de refroidissement comprenant un réservoir de dégazage tel que décrit ci-dessus.

L'invention concerne également un véhicule comprenant un circuit de refroidissement et/ou un réservoir de dégazage tel que décrit ci-dessus.

Pour éviter tout doute, toutes les caractéristiques décrites ici s'appliquent également à tout aspect de l'invention.

Dans le cadre de la présente demande, il est expressément prévu que les divers aspects, modes de réalisation, exemples et alternatives exposés dans les paragraphes précédents, dans les revendications et/ou dans la description et les dessins suivants, et en particulier les caractéristiques individuelles de ceux-ci, peuvent être pris indépendamment ou dans n'importe quelle combinaison. En d'autres termes, tous les modes de réalisation et/ou les caractéristiques de tout mode de réalisation peuvent être combinés de n'importe quelle manière, à moins que ces caractéristiques ne soient incompatibles.

Pour éviter toute ambiguïté, les termes "peut", "et/ou", "par exemple", "par exemple" et tout autre terme similaire utilisés dans le présent document doivent être interprétés comme non limitatifs, de sorte que toute caractéristique ainsi décrite ne doit pas nécessairement être présente. En effet, toute combinaison de caractéristiques optionnelles est expressément envisagée sans s'écarter de la portée de l'invention, que celles-ci soient ou non expressément revendiquées. Le demandeur se réserve le droit de modifier toute revendication déposée à l'origine ou de déposer toute nouvelle revendication en conséquence, y compris le droit de modifier toute revendication déposée à l'origine pour qu'elle dépende de et/ou incorpore toute caractéristique de toute autre revendication bien qu'elle ne soit pas revendiquée à l'origine de cette manière.

### Brève description des figures

D'autres caractéristiques et avantages de l'invention apparaitront au cours de la lecture de la description détaillée qui va suivre pour la compréhension de laquelle on se reportera aux dessins annexés dans lesquels :
La figure 1 illustre un exemple de réservoir de dégazage selon l'invention ;
La figure 2 illustre l'intérieur d'une partie supérieure du réservoir de dégazage de la figure 1 ;
La figure 3 illustre le tube plongeur du réservoir de dégazage de la figure 1 ;
La figure 4 est une vue en coupe de la partie supérieure représentée sur la figure 2, prise selon l'axe longitudinal du tube plongeur ;
La figure 5 est une vue en coupe à travers les tuyaux d'entrée du réservoir de dégazage de la figure 1, montrant le tube plongeur dans une première position ; et
La figure 6 est une vue similaire à celle de la figure 5, montrant le tube plongeur dans une deuxième position.

### Description détaillée de l'invention

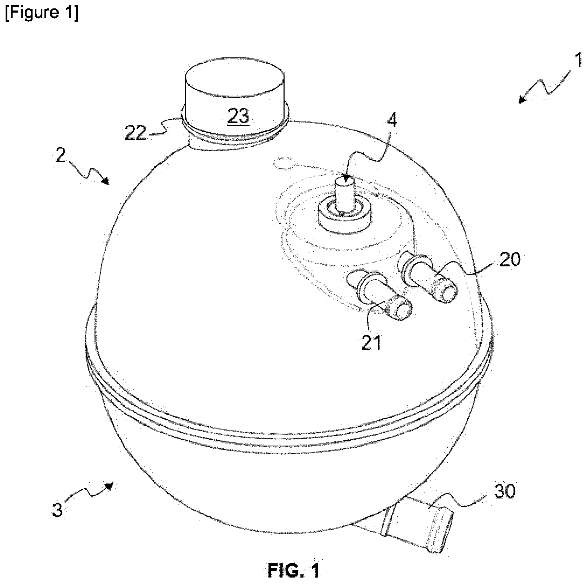

Différents aspects de différents modes de réalisation selon l'invention sont décrits plus en détail ci-dessous, en faisant référence aux figures 1 à 6 jointes.

En se référant à la figure 1, un réservoir de dégazage 1 est illustré qui comprend une partie supérieure 2 et une partie inférieure 3. La partie supérieure 2 comprend un tube plongeur 4, deux conduits d'entrée 20, 21, un col 22 qui décrit une ouverture et un bouchon 23 vissé sur le col 22 pour fermer l'ouverture. La partie inférieure 3 comprend un conduit de sortie 30.

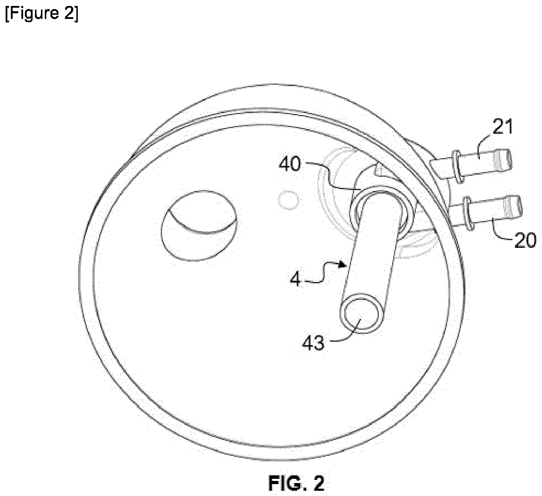

La partie supérieure 2 est représentée plus clairement sur la figure 2. Le tube plongeur 4 s'étend entre les conduits d'entrée 20, 21 et la partie inférieure 3 du réservoir 1. Le tube plongeur 4 est reçu de manière rotative à l'intérieur d'un logement de vanne tubulaire 40 en communication de fluide avec les conduits d'entrée 20, 21.

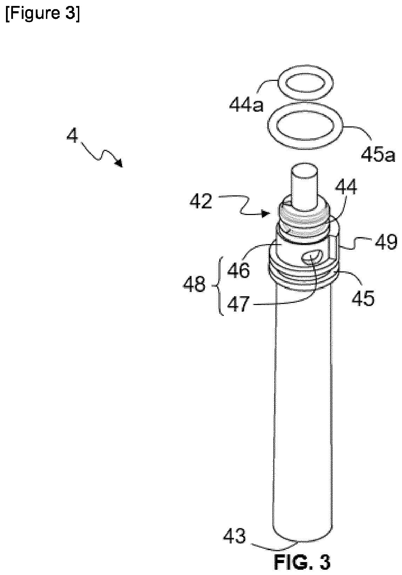

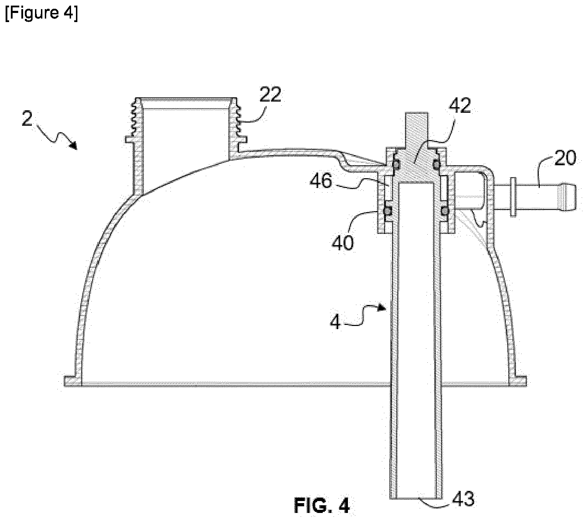

Le tube plongeur 4, représentée plus clairement sur les figures 3 et 4, comprend une extrémité fermée 42 et une extrémité ouverte 43 se terminant dans la partie inférieure 3 du réservoir 1. L'extrémité fermée 42 comprend une rainure circonférentielle 44 destinée à recevoir un joint torique 44a. Le tube plongeur 4 comprend également une seconde rainure circonférentielle 45 espacée axialement sur sa longueur par rapport à la première rainure circonférentielle 44, qui est également configurée pour recevoir un joint torique 45a.

Un évidement partiellement circonférentiel 46 est inclus entre les rainures circonférentielles 44, 45 et un trou radial 47 s'étend de la base de l'évidement partiellement circonférentiel 46 à l'intérieur du tube plongeur 4. L'évidement partiellement circonférentiel 46 et le trou radial 47 décrivent ensemble un passage de fluide 48 pour relier un ou les deux conduits d'entrée 20, 21 à l'intérieur du tube plongeur 4, de sorte que le tube plongeur 4 fournit un conduit de fluide entre le ou chaque conduit d'entrée 20, 21 et la partie inférieure 3 du réservoir 1. Le tube plongeur 4 comprend également une surface périphérique 49 sur le côté diamétralement opposé à l'évidement partiellement circonférentiel 46, pour obstruer sélectivement l'un des conduits d'entrée 20, 21.

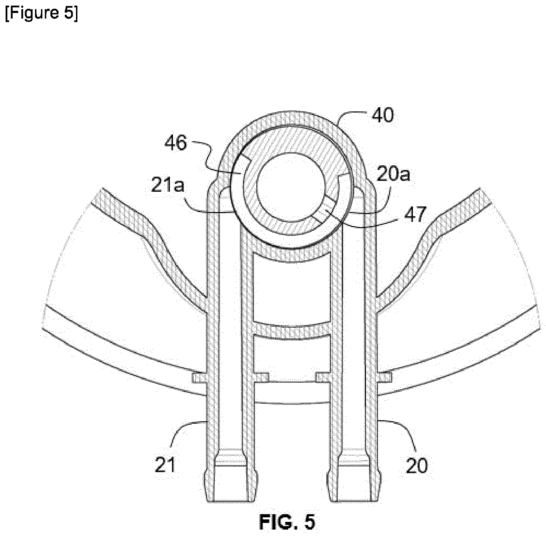

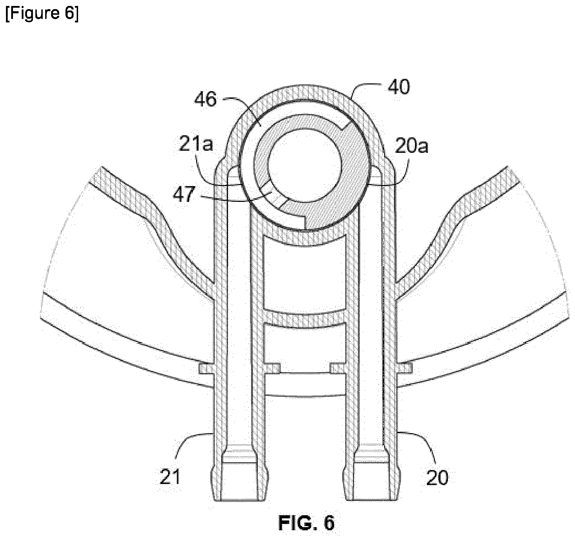

En se référant maintenant aux figures 5 et 6, le logement de vanne tubulaire 40 comprend une première entrée 20a dans sa périphérie intérieure, qui est en communication fluide avec un premier conduit d'entrée 20, et une deuxième entrée 21a dans sa périphérie intérieure, qui est en communication de fluide avec un second conduit d'entrée 21. Le tube plongeur 4 peut tourner à l'intérieur du logement de vanne tubulaire 40 pour aligner sélectivement l'évidement partiellement circonférentiel 46 avec l'une ou les deux entrées 20a, 21a.

Comme le montre la figure 5, le tube plongeur 4 a une première position dans laquelle l'évidement partiellement circonférentiel 46 est aligné avec les deux entrées 20a, 21a. Dans cette position, le fluide provenant de chacun des conduits d'entrée 20, 21 peut passer dans l'évidement partiellement circonférentiel 46, à travers le trou radial 47, le long de l'intérieur du tube plongeur 4 et dans la partie inférieure 3 du réservoir 1.

Comme le montre la figure 6, le tube plongeur 4 a une deuxième position dans laquelle l'évidement partiellement circonférentiel 46 est aligné avec la deuxième entrée 21a, tandis que la surface périphérique 49 est alignée avec la première entrée 20a. Dans cette position, le fluide provenant du second conduit d'entrée 21 peut passer dans l'évidement partiellement circonférentiel 46, à travers le trou radial 47, le long de l'intérieur du tube plongeur 4 et dans la partie inférieure 3 du réservoir 1. Cependant, la surface périphérique 49 obstrue la première entrée 20a dans cette position, empêchant ainsi la communication de fluide entre la première entrée 20 et le réservoir 1.

D'autres solutions sont également envisagées. En fait, l'homme du métier appréciera que plusieurs variantes des modes de réalisation précités soient envisageables sans sortir du cadre de l'invention. Par exemple, le tube plongeur 4 peut avoir une ou plusieurs positions supplémentaires, comme décrit ci-dessus.

Dans toute la description et les revendications de cette spécification, les mots "comprennent" et "contiennent" et leurs variations signifient "y compris mais non limité à", et ils ne sont pas destinés à (et n'excluent pas) d'autres parties, additifs, composants, entiers ou étapes. Dans toute la description et les revendications de cette spécification, le singulier englobe le pluriel, à moins que le contexte ne l'exige autrement. En particulier, lorsque l'article indéfini est utilisé, la spécification doit être comprise comme envisageant la pluralité ainsi que la singularité, à moins que le contexte n'exige autre chose.

Les caractéristiques, nombres entiers, caractéristiques, composés ou groupes décrits en liaison avec un aspect, une réalisation ou un exemple particulier de l'invention doivent être compris comme étant applicables à tout autre aspect, réalisation ou exemple décrit dans le présent document, sauf incompatibilité avec celui-ci. Toutes les caractéristiques divulguées dans la présente spécification (y compris les revendications, l'abrégé et les dessins qui l'accompagnent), et/ou toutes les étapes d'une méthode ou d'un procédé ainsi divulgué, peuvent être combinées selon n'importe quelle combinaison, à l'exception des combinaisons où au moins certaines de ces caractéristiques et/ou étapes sont mutuellement exclusives. L'invention n'est pas limitée aux détails de tous les modes de réalisation précédents. L'invention s'étend à toute nouvelle caractéristique, ou toute nouvelle combinaison, des caractéristiques divulguées dans la présente spécification (y compris les revendications, l'abrégé et les dessins qui l'accompagnent), ou à toute nouvelle caractéristique, ou toute nouvelle combinaison, des étapes de tout procédé ou processus ainsi divulgué.

L'attention du lecteur est dirigée vers tous les papiers et documents qui sont déposés simultanément ou antérieurement à cette spécification en relation avec cette demande et qui sont ouverts à l'inspection publique avec cette spécification, et le contenu de tous ces papiers et documents est incorporé ici par référence.

## Revendications

1. Un réservoir de dégazage (1) comprenant une première entrée (20a) et un tube plongeur (4) s'étendant entre la première entrée et une partie inférieure (3) du réservoir, dans lequel le tube plongeur est mobile, en utilisation, par rapport à la première entrée entre une première position dans laquelle le tube plongeur fournit un conduit de fluide entre la première entrée et la partie inférieure du réservoir, et une deuxième position dans laquelle la communication de fluide entre la première entrée et la partie inférieure du réservoir est fermée.

2. Réservoir de dégazage selon la revendication 1, **caractérisé en ce que** le tube plongeur (4) comprend un passage de fluide (46, 47) qui est aligné avec la première entrée (20a) lorsque le tube plongeur est dans la première position, pour ainsi mettre en communication la première entrée avec l'intérieur du tube plongeur, et une surface périphérique (49) qui obstrue la première entrée lorsque le tube plongeur est dans la deuxième position.

3. Réservoir de dégazage selon la revendication 2, **caractérisé en ce que** le tube plongeur (4) est rotatif par rapport à la première entrée (20a), et le passage de fluide (46, 47) du tube plongeur comprend un évidement partiellement circonférentiel (46) avec un trou radial (47) dans celui-ci.

4. Réservoir de dégazage selon la revendication 3, **caractérisé en ce qu'**il comprend un logement de vanne tubulaire qui comprend la première entrée (20a).

5. Réservoir de dégazage selon la revendication 4, **caractérisé en ce que** le tube plongeur (4) est reçu de manière rotative à l'intérieur du logement de vanne tubulaire (40).

6. Réservoir de dégazage selon l'une quelconque des revendications précédentes, **caractérisé en ce qu'**il comprend un actionneur pour déplacer le tube plongeur entre les première et deuxième positions.

7. Réservoir de dégazage selon l'une quelconque des revendications précédentes, **caractérisé en ce qu'**il comprend une sortie dans la partie inférieur du réservoir et **en ce qu'**il comprend une chicané entre le tube plongeur et la sortie.

8. Réservoir de dégazage selon la revendication précédente, **caractérisé en ce que** la chicane entoure au moins partiellement la sortie.

9. Réservoir de dégazage selon l'une quelconque des revendications précédentes, **caractérisé en ce qu'**il comprend une deuxième entrée (21a).

10. Réservoir de dégazage selon la revendication 9, **caractérisé en ce que** le tube plongeur (4) fournit un conduit de fluide entre la deuxième entrée (21a) et la partie inférieure (3) du réservoir lorsque le tube plongeur est dans chacune des première et deuxième positions.

11. Réservoir de dégazage selon la revendication 9, **caractérisé en ce que** la communication de fluide entre la deuxième entrée et la partie inférieure du réservoir est fermée lorsque le tube plongeur est dans la première position.

12. Réservoir de dégazage selon la revendication 9, **caractérisé en ce que** le tube plongeur fournit un conduit de fluide entre la deuxième entrée et la partie inférieure du réservoir lorsque le tube plongeur est dans la deuxième position.

13. Réservoir de dégazage selon l'une quelconque des revendications 9 à 12, **caractérisé en ce que** le tube plongeur fournit un conduit de fluide entre chacune des première et deuxième entrées et la partie inférieure du réservoir lorsque le tube plongeur est dans la première position, **en ce que** la communication de fluide entre la première entrée et la partie inférieure du réservoir est fermée lorsque le tube plongeur est dans la deuxième position, **en ce que** le tube plongeur fournit un conduit de fluide entre la deuxième entrée et la partie inférieure du réservoir lorsque le tube plongeur est dans la deuxième position, et **en ce que** la communication de fluide entre chacune des première et deuxième entrées et la partie inférieure du réservoir est fermée lorsque le tube plongeur est dans une troisième position.

14. Circuit de refroidissement **caractérisé en ce qu'**il comprend un réservoir de dégazage selon l'une quelconque des revendications précédentes.

15. Véhicule **caractérisé en ce qu'**il comprend un circuit de refroidissement selon la revendication 14.
